# FASCICULE DE BREVET EUROPEEN

(11) **EP 0 879 357 B1**
(45) Date de publication et mention de la délivrance du brevet: **13.11.2002**
(21) Numéro de dépôt: 97904416.1
(22) Date de dépôt: 10.02.1997
(51) Int. Cl.: F04B 43/04, F04B 19/00, B01D 35/26

(54) **MICROPOMPE COMPRENANT UN FILTRE MICRO-USINE**
MIKROPUMPE MIT EINEM MIKROBEARBEITETEN FILTER
MICROPUMP COMPRISING A MICROMACHINED FILTER

(30) Priorité: 09.02.1996 FR 9601628
(43) Date de publication de la demande: 25.11.1998
(73) Titulaire: WESTONBRIDGE INTERNATIONAL LIMITED, Dublin 2 (IE)
(72) Inventeur: VAN LINTEL, Harald, CH-1006 Lausanne (CH); LEUNGKI, Yit, Shun, CH-1209 Genève (CH)
(74) Mandataire: Briat, Sophie
(86) Numéro de dépôt international: EP9700624
(87) Numéro de publication internationale: WO97029283

(56) Documents cités:
- EP-A- 0 587 912
- WO-A-95/19502
- GB-A- 2 248 891
- US-A- 4 797 211

## Description

Micropompe comprenant un filtre micro-usiné.

La présente invention a pour objet une micropompe comprenant un filtre micro-usiné et au moins deux premiers moyens formant plaquettes qui définissent une chambre de pompage.

De façon plus précise, la présente invention concerne un filtre qui permet au sein d'un liquide de retenir les particules de taille trop élevée (par exemple des impuretés) qui se déplacent vers et à travers un ou des clapets d'une micropompe, afin que le fonctionnement de cette dernière ne soit pas entravé. Ce problème se présente notamment mais non exclusivement dans le cas des micropompes du type à commande piézo-électrique ou pour un capteur, tel qu'un capteur de pression, ces composants recevant un liquide entre un élément en silicium et un élément en verre qui se trouve en regard de l'élément en silicium.

Dans le cas des micropompes, se pose aussi le problème du taux de fuite lorsque la pompe n'est pas en fonctionnement. La présente invention a également pour but de limiter le taux de fuite d'une micropompe qui n'est pas en fonctionnement. En effet, un taux de fuite trop important au sein d'une micropompe peut nuire au bon fonctionnement, à la fiabilité, et à la précision d'une telle micropompe. Dans le cas des micropompes qui doivent être implantées dans le corps humain pour délivrer un débit parfaitement contrôlé de liquide, il est important que la fiabilité d'une telle pompe soit durable dans le temps.

Le document EP-A-587 912 présente une micropompe comprenant un filtre micro-usiné et comportant au moins deux premiers moyens formant plaquette qui définissent une chambre de pompage, ledit filtre comprenant des moyens d'alimentation en liquide, des moyens pour recueillir le liquide, des deuxièmes moyens formant plaquette et des moyens formant plaquette de silicium, lesdits deuxièmes moyens formant plaquette et lesdits moyens formant plaquette de silicium se faisant face respectivement en formant, entre eux, une cavité destinée à recevoir un liquide, ladite cavité étant partiellement obturée par au moins une cloison transversale dont la hauteur est inférieure à la profondeur de la cavité et qui sépare la cavité en une partie amont et une partie aval par rapport à ladite cloison, lesdits moyens formant plaquette de silicium étant au moins partiellement fixés de façon étanche sur lesdits deuxièmes moyens formant plaquette, ladite partie aval de la cavité communicant avec ladite chambre de pompage et l'ensemble comprenant les deux premiers moyens formant plaquette, les moyens formant plaquette de silicium et les deuxièmes moyens formant plaquette constituant une structure en sandwich.

Un objet de la présente invention est de fournir une micropompe comprenant un filtre micro-usiné, afin qu'à la sortie du filtre, le liquide ne contienne pas de particules dont la taille, trop élevée, puisse nuire au bon fonctionnement de tous les éléments et organes de la micropompe.

Pour atteindre ce but, le filtre se caractérise en ce que ladite cloison est continue entre les parois latérales de ladite cavité.

Grâce à l'invention, on résoud le problème des particules dont la taille trop élevée est nuisible au fonctionnement d'un composant tel qu'une micropompe par interposition d'une cloison obturant partiellement mais presque entièrement une cavité longitudinale au travers de laquelle le fluide s'écoule.

On peut ainsi distinguer deux fonctions du filtre selon l'invention: diminution du taux de fuite au niveau des clapets et amélioration de la fiabilité de la micropompe. En effet, l'écoulement du liquide à travers les clapets d'entrée et/ou de sortie lorsque la micropompe est au repos est réduit si la taille des particules admises est réduite. De plus, grâce à ce filtre, on évite le risque, lorsque la micropompe est activée, qu'une particule de taille trop élevée empêche la fermeture d'un clapet et perturbe la réalisation de l'amorçage de la micropompe.

Avec un tel filtre, la résistance à l'écoulement du liquide est très faible tout en maintenant un taux de filtration élevé. De préférence, la cloison traverse la cavité en étant repliée en lacets. Ceci permet de réduire les dimensions du filtre en gardant la même longueur totale de cloison.

Pour les modes de réalisation présentés ci-après, la cavité est une rainure gravée à la surface d'une plaquette de silicium. Dans le mode de réalisation préféré de la micropompe, l'un des premiers moyens formant plaquette et les moyens formant plaquette de silicium constituent la même plaquette de silicium et l'autre des premiers moyens formant plaquette et les deuxièmes moyens formant plaquette constituent la même plaquette de verre

D'autres caractéristiques et avantages de la présente invention apparaîtront mieux à la lecture de la description qui suit de modes de mise en oeuvre de l'invention donnés à titres d'exemples non limitatifs. La description se réfère aux figures annexées sur lesquelles :
- la figure 1 est une vue en coupe longitudinale simplifiée du filtre de la micropompe selon l'invention;
- la figure 2 est une vue de dessus du filtre de la figure 1 selon la direction II-II;
- la figure 3 est une vue de dessus d'un mode préféré de réalisation du filtre ;
- la figure 4 est une vue en perspective simplifiée d'une micropompe;
- la figure 5 est une vue en coupe verticale d'un filtre intégré dans une micropompe selon l'invention ;
- la figure 6 est une vue en coupe verticale partielle et agrandie d'un filtre intégré dans un autre modèle de micropompe selon l'invention ;
- la figure 7 est une vue en coupe verticale et longitudinale simplifiée d'un autre mode de réalisation d'un filtre de la micropompe;
- la figure 8 est vue en coupe du filtre de la figure 3 selon la direction VIII-VIII; et
- la figure 9 est un schéma simplifié d'un exemple de filtre comportant plusieurs cloisons montées en parallèle ;
- les figures 10 et 11 représentent des variantes de réalisation des cloisons contenues dans le filtre, et,
- la figure 12 représente de façon schématique une autre forme possible du filtre de la micropompe selon l'invention.

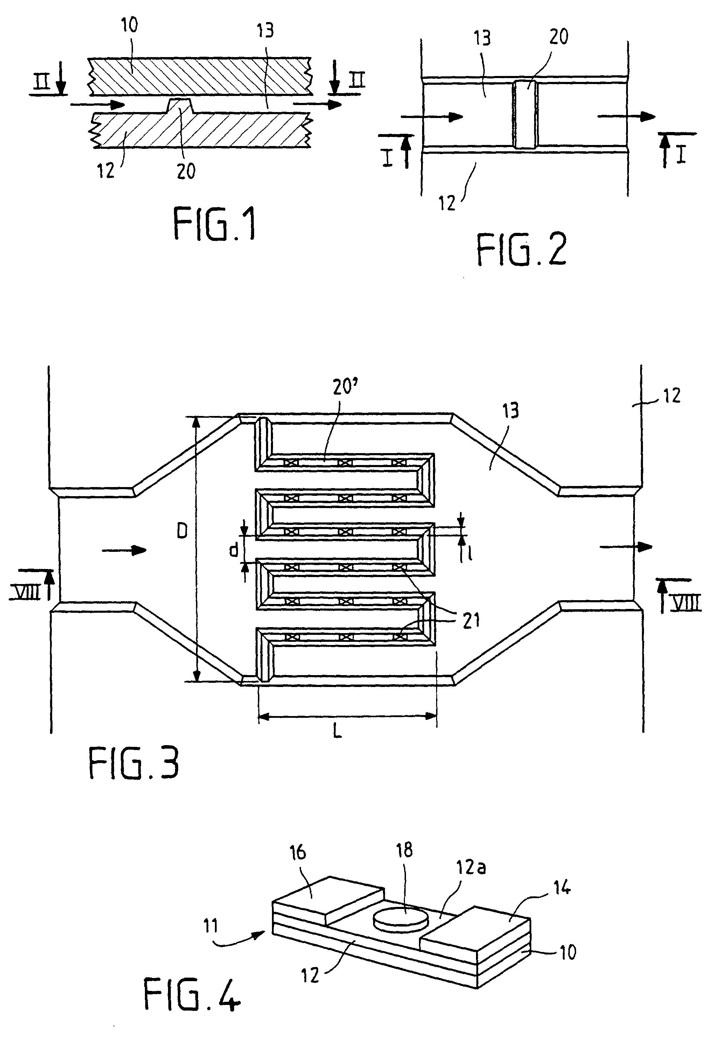

Le filtre représenté sur les figures 1 et 2 comprend une plaquette de verre 10 empilée sur une plaquette de silicium 12, une rainure 13 étant aménagée entre les deux plaquettes, par gravure de la plaquette de silicium, pour l'écoulement d'un fluide, le sens de cet écoulement étant représenté par des flèches. L'ensemble constitué par la plaquette de verre 10 et la plaquette de silicium 12 constitue typiquement un empilement présent dans de nombreux composants électroniques utilisant la technique du silicium. Les plaquettes 10 et 12 peuvent être par exemple fixées l'une à l'autre par la technique de soudage anodique qui sera exposée dans son principe ci-après. Afin de réaliser le filtre, il est nécessaire, avant ce soudage, de créer une rainure longitudinale 13 sur la surface externe de la plaquette 12 qui va se trouver en regard de la plaquette de verre 10. Cette rainure longitudinale est partiellement mais non entièrement obstruée par un obstacle sous la forme d'une cloison 20 qui s'étend sur toute la largeur de la rainure 13 mais pas tout à fait sur toute sa hauteur.

La rainure et la cloison peuvent être réalisées grâce à des techniques de gravure ou de croissance sélective d'oxyde de silicium, ces techniques permettant de travailler sur des dimensions très réduites telles que des dimensions inférieures à un micromètre.

Grâce à cette cloison 20, le fluide circulant entre les plaquettes de verre 10 et la plaquette de silicium 12 va passer au dessus de la cloison 20, l'intervalle entre le sommet de cette cloison et la face externe de la plaquette de verre 10 qui se trouve en regard de la cloison 20 stoppant les impuretés dont la taille est supérieure audit intervalle.

Afin d'éviter, qu'au niveau de la cloison, la rainure présente une largeur D trop importante, il est préférable de réaliser une cloison repliée en lacet 20'. Un exemple de cloison présentant cette structure est représenté à la figure 3. Grâce à cette forme en lacets, on obtient une structure compacte pour laquelle la résistance à l'écoulement du liquide au niveau de la cloison 20' est très faible. Dans cette configuration, la cloison 20' comprend des premiers éléments de cloison formant des branches rectilignes longitudinales parallèles par rapport à la direction longitudinale de la rainure 13 et des deuxièmes éléments de cloison formant des branches rectilignes transversales plus courtes et placés alternativement en avant et en arrière des branches longitudinales de façon à les relier entre elles et à former une cloison continue entre les parois latérales de la rainure 13. Sur la figure 3 on a représenté une cloison 20' qui serpente entre les parois latérales de la rainure 13 et qui se compose de premiers éléments de cloison identiques et placées à intervalles réguliers parallèlement et de façon aligné les uns à côtés des autres, chacun des premiers éléments de cloison étant relié d'une part par son extrémité avant et d'autre part, par son extrémité arrière à ses deux premiers éléments de cloison voisins grâce à un deuxième élément de cloison.

De préférence, la cloison 20 ou 20' possède des parois latérales inclinées en biseau par rapport à la direction orthogonale aux faces planes de la plaquette de silicium 12. Dans ce cas, le profil en coupe transversale de la cloison forme un trapèze mais un profil triangulaire ou rectangulaire convient également, tout comme des variantes aux contours plus arrondis tels que des profils en demi-oval ou demi-cercle.

Comme on l'a déjà indiqué, l'invention s'applique notamment à la filtration du liquide circulant dans une micropompe. Sur la figure 4, on a représenté schématiquement une telle micropompe qui est constituée par une première plaquette en verre 10 dans laquelle sont ménagés un orifice d'entrée et un orifice de sortie de la pompe, une plaquette de silicium 12 constituant une membrane déformable et deux pièces de verre 14 et 16 fixées sur l'autre face de la plaque de silicium 12 en laissant libre une partie de la face externe 12a de la plaquette de silicium 12. Pour éviter l'introduction de contrainte mécanique dans cette structure, la liaison entre le verre 10, 14 et 16 et le silicium 12 est réalisée de préférence par soudage anodique. Cette technique connue en soi consiste à porter l'ensemble des pièces en silicium et en verre à une température de l'ordre de 300°C et à placer cet empilement entre deux électrodes en contact avec les plaquettes de silicium et de verre en appliquant un potentiel négatif de l'ordre de -1000 V à l'électrode appliquée contre le verre. On obtient ainsi une soudure étanche à relativement basse température entre la membrane de silicium et les différentes pièces de verre. Le fonctionnement de la pompe est commandé par un actionneur piézo-électrique 18 qui est fixé sur la face libre 12a de la plaquette en silicium 12. Les contraintes mécaniques induites par la commande électrique de l'actionneur piézo-électrique 18 provoquent des déformations de la membrane 12, ce qui commande l'entrée et la sortie du liquide dans un espace de la micropompe situé entre la plaquette de verre 10 et la plaquette de silicium 12, cet espace formant la chambre de pompage 9.

Pour le fonctionnement complet d'une telle micropompe, on pourra se référer par exemple à la demande de brevet international n° PCT/IB95/00028.

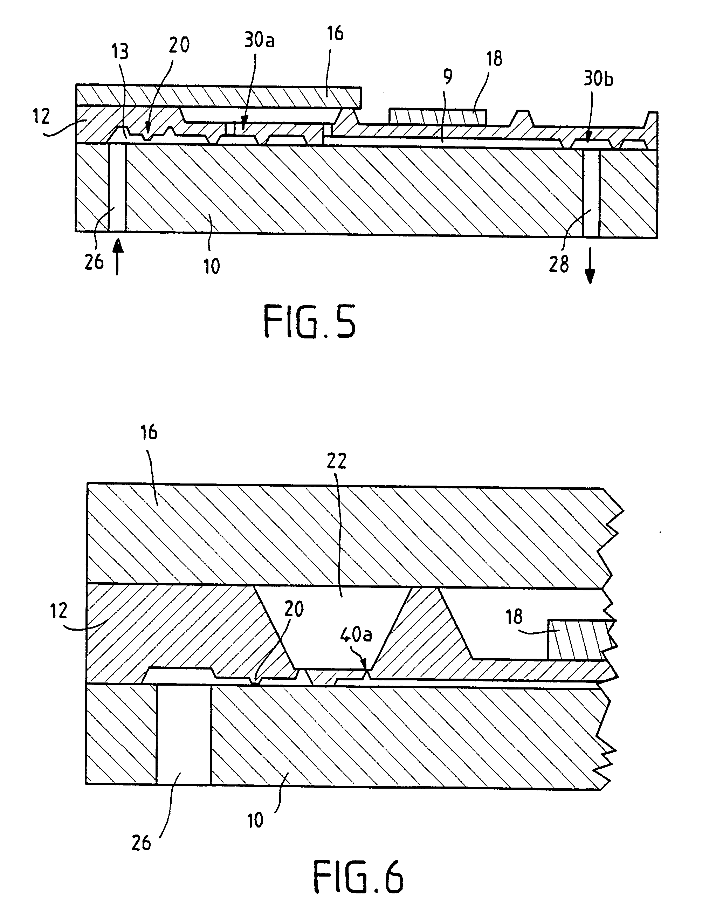

Sur les figures 5 et 6, les mêmes références servent à désigner les parties de la micropompe qui ont déjà été présentées en rapport avec la figure 4. Sur la figure 5, on voit l'orifice d'entrée 26 de la micropompe et l'orifice de sortie 28. La micropompe de la figure 5 est équipée d'une valve ou clapet d'entrée 30a ainsi que d'une valve ou clapet de sortie 30b. Les clapets 30a et 30b sont des clapets usinés dans la plaquette en silicium du type comprenant un joint annulaire reposant sur une face externe de la plaquette en verre 10. Le clapet d'entrée 30a constitue un organe de contrôle d'entrée du liquide situé en aval de la rainure 13, c'est-à-dire en aval du filtre, et en amont de la chambre de pompage 9.

Dans le cas de la figure 6, seule une partie de la micropompe est représentée en coupe. Un clapet 40a d'un type différent de ceux de la figure 5 est utilisé: c'est un clapet à membrane. Le filtre est réalisé sur la même plaquette de silicium 12 que le clapet d'entrée. Toutefois, lorsque la plaquette de silicium 12 est montée avec la plaquette de verre 10, le filtre n'est pas en communication directe avec le clapet d'entrée 40a et, dans le cas de la figure 6, le liquide transite d'abord par un espace de liaison 22 avant d'atteindre le clapet d'entrée 40a.

Lors de l'usinage de la plaquette en silicium 12, la cloison 20 du filtre se trouve en amont par rapport à la partie de la plaquette en silicium 12 qui se trouve en regard de l'actionneur piézo-électrique 18 et qui sert de membrane déformable, et dans le cas de la présence de clapet d'entrée 30a ou 40a, ce clapet d'entrée est placé en aval du filtre. Lors de la circulation du liquide, lorsque le liquide débouche à la sortie de la conduite d'entrée 26 de la micropompe, il traverse d'abord le filtre 20 puis l'espace de liaison 22 et passe par le clapet d'entrée 30a ou 40a qui s'ouvrira lors d'une différence de pression suffisante entre chaque côté du clapet.

Grâce au dispositif de micropompe selon l'invention, les clapets et/ou la micropompe ne présentent pas de dysfonctionnement dû à des particules de taille trop élevée (par exemple des impuretés) qui se coinceraient dans des lieux de passage du liquide. Ainsi, le clapet d'entrée et le clapet de sortie peuvent se fermer et rester étanches lorsque la micropompe ne fonctionne pas, ceci permettant d'éviter des fuites ou des pertes de pression au niveau de la micropompe.

Dans les exemples représentés sur les figures 1 à 6, le filtre est réalisé sur la même plaquette de silicium que celle de la micropompe: le filtre est intégré dans la structure de la micropompe. Néanmoins, il est possible de réaliser un filtre entre deux autres plaquettes, une plaquette de verre et une plaquette de silicium, et de relier par soudage anodique, par exemple, ce filtre sur la plaquette de verre de la micropompe qui contient la conduite d'arrivée de fluide: on réalise ainsi une structure en sandwich qui est compacte.

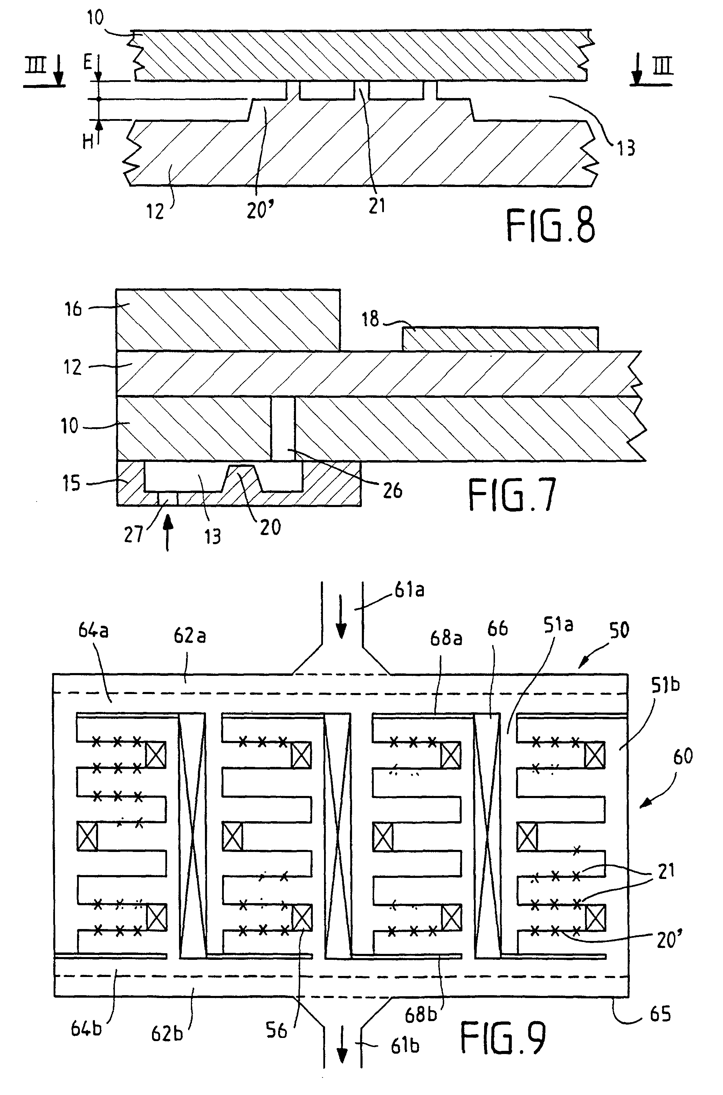

Sur la figure 7, on a envisagé un cas intermédiaire dans lequel les premiers moyens formant plaquette de silicium 12 sont séparés des deuxièmes moyens formant plaquette de silicium 15 par une plaquette de verre 10 constituant à la fois des premiers moyens formant plaquette de verre et des deuxièmes moyens formant plaquette de verre. La plaquette de silicium 15 comprend un orifice d'entrée 27 débouchant dans une rainure 13 comportant la cloison 20, la partie aval de la rainure 13 communicant avec l'orifice d'entrée 26 de la micropompe.

Dans les exemples décrits précédemment, on a envisagé certaines possibilités pour l'empilement des plaquettes de verre et de silicium mais il va de soi que d'autres types d'empilements sont possibles sans sortir du cadre de l'invention.

Un autre aspect important du filtre de la micropompe selon l'invention consiste à effectuer une filtration régulière tout le long de la cloison en maintenant constant l'écartement E entre le sommet de la cloison et la face plane de la plaquette, de préférence mais non exclusivement en verre, qui est en regard du sommet de la cloison et sert de plafond à la cavité ou rainure 13 contenant le liquide. Selon l'invention, cette condition est remplie grâce à des moyens d'attache destinés à relier directement avec un écartement constant ladite cloison aux moyens formant plaquette faisant face aux moyens formant plaquette qui portent la base de ladite cloison.

Un exemple de réalisation de ces moyens d'attache est représenté sur la figure 8 sous la forme de points d'attache 21 reliant le sommet de la cloison 20' à la face plane de la plaquette de verre 10 qui se trouve en regard de la cloison. Ces points d'attache 21 constituent des prolongements ponctuels de la cloison 20', en silicium, qui seront fixés, par exemple par soudage anodique, à la plaquette en verre 10. Comme on peut le voir sur la figure 8, la cloison 20' possède une hauteur H et les points d'attache 21 possèdent une hauteur E égale à l'écartement entre la cloison 20' et la face plane qui lui fait face c'est-à-dire la taille maximum des particules qui pourront traverser le filtre. La dimension minimum de cet écartement qui forme une fente pour le passage du liquide à filtrer peut aller jusqu'à 0,1 micromètre. On peut concevoir également des moyens d'attache de dimension plus importante qui constituent une sorte de pilier entre la cloison et la plaquette en verre: on se reportera aux éléments 56 décrits ci-après en relation avec la figure 9.

Il est possible d'obtenir une filtration encore plus efficace en plaçant au moins deux cloisons 20 ou 20' en parallèle dans la rainure 13 de façon à avoir au moins deux unités filtrantes fonctionnant en parallèle.

Des essais ont été réalisés avec une série de cinq cloisons placées en parallèle sur la trajectoire du fluide, chaque cloison comportant vingt branches longitudinales. Dans ces essais, voir figure 3, la largeur D de la rainure 13 était de 1 mm au niveau de la cloison 20', la longueur L d'une branche longitudinale de la cloison en lacets (ou largeur d'un lacet) était également de 1 mm, la largeur au sommet 1 de la cloison 20' était de 10 micromètres et l'espace transversal d entre les sommets consécutifs de deux branches de la cloison en lacets était de 40 micromètres. Dans cet essai, la cloison présentait des parois latérales inclinées en biseau par rapport à la direction orthogonale à la face plane du fond de la rainure 13. Des tests ont été effectués en variant la largeur L des lacets et le nombre de cloisons placées en parallèle: de préférence la largeur L des lacets est inférieure à 1mm, la largeur d entre deux lacets voisins est comprise entre 20 et 200 micromètres, la cloison repliée en lacets 20' s'étend sur une longueur D supérieure ou égale à 1mm et la largeur au sommet de la cloison est comprise entre 1 et 20 micromètres.

Dans le cas de cloisons placées en parallèle, afin de répartir le débit de liquide entre les différentes unités filtrantes, le dispositif de micropompe contient des moyens d'alimentation en liquide de chaque unité filtrante et des moyens pour recueillir le liquide à la sortie de chaque unité filtrante. Par exemple, les moyens d'alimentation en liquide de chaque unité filtrante sont constitués d'un canal d'entrée desservant l'entrée de chaque unité filtrante, c'est-à-dire la partie amont de la rainure correspondante, et les moyens pour recueillir le liquide à la sortie de chaque unité filtrante sont constitués d'un canal de sortie communiquant avec la sortie de chaque unité filtrante, c'est-à-dire la partie aval de la rainure correspondante, le niveau inférieur de ces canaux étant plus bas que la base de la cloison 20'.

Dans le cas d'unités filtrantes placées en parallèle, on utilise des moyens de répartition de liquide destinés à permettre une distribution homogène du liquide entre les différentes unités filtrantes: une rigole ou rainure profonde dont le niveau de fond constitue le niveau le plus bas de toutes les parties du filtre pouvant recevoir le liquide. Il faut également prévoir des moyens de séparation étanche empêchant le passage directe du liquide entre deux unités filtrantes voisines.

Un exemple de réalisation d'un filtre 60 avec quatre unités filtrantes 50 montées en parallèle est représenté schématiquement sur la figure 9. Cette figure représente le filtre 60 qui est délimité par la ligne 65, cette limite correspondant au bord de la zone gravée dans la plaquette de silicium, cette zone étant une rainure 13 dans le cas d'un filtre simple, le liquide pouvant circuler dans ladite zone. D'amont en aval, c'est-à-dire de haut en bas sur la figure 9, le filtre 60 présente un canal d'entrée 61a qui s'élargit en entonnoir à son extrémité de sortie, une rainure profonde 62a ou rigole d'entrée du filtre, un canal d'alimentation 64a du liquide, quatre unités filtrantes placées côte à côte de gauche à droite, un canal de recueillement 64b du liquide communicant avec la sortie de chaque unité filtrante 50, une rainure profonde 62b ou rigole de sortie, un canal de sortie 61b dont l'extrémité d'entrée se rétrécit en entonnoir. La rigole d'entrée 62a, le canal d'alimentation 64a, le canal de recueillement 64b et la rigole de sortie 62b forment des cavités destinées à recevoir le liquide qui s'étendent sur toute la largeur du filtre 60.

La profondeur de la rigole d'entrée 62a permet une distribution homogène du liquide entre les unités filtrantes et par conséquent un volume de liquide à filtrer sensiblement égale dans chaque unité filtrante 50, ce qui permet de dimensionner avec précision cette unité filtrante avec, notamment, une hauteur H de cloison qui peut être diminuée tout en maintenant un bon rendement. En effet, pour des raisons de fabrication, il est très difficile d'obtenir une hauteur de cloison importante. De plus, les rigoles d'entrée 62a et de sortie 62b réduisent la présence d'air qui serait nuisible lors de l'amorçage de la micropompe.

Sur la figure 9 les moyens de séparation sont des blocs 66 formant, sur toute la longueur de la zone filtrante du filtre 60, une séparation entre les unités filtrantes 50 voisines. Ces blocs 66 sont rectangulaires et relient de façon étanche la plaque de silicium sur laquelle est réalisé le filtre 60 à la plaque en verre qui lui fait face. Chaque unité filtrante possède une cloison 20' formant des lacets de haut en bas, cette cloison comportant des rangées de points d'attache 21 et des piliers d'attache 56 positionnés dans certaines des zones de repli de la cloison pour former des moyens d'attache de dimension plus importante que les points d'attache.

Afin de contraindre le liquide à franchir une des cloisons 20', une paroi d'entrée 68a (s'étendant horizontalement sur la figure 9) relie l'extrémité proximale d'une cloison 20' à l'extrémité proximale du bloc 66 situé à sa droite (les extrémités considérées sont en haut de la figure 9) et constitue un obstacle pour le liquide qui doit rentrer dans l'unité filtrante en contournant cette paroi 68a et en passant entre l'extrémité gauche de ladite paroi 68a et le bord droit d'un bloc 66. Cette configuration comprend pour chaque unité filtrante 50, une zone 51a située entre un bloc 66 et une cloison 20', juste en amont (à gauche) de la cloison 20', sur toute la longueur de cette cloison et permettant de répartir le liquide sur toute la longueur de la cloison 20'. Symétriquement à la paroi d'entrée 68a, chaque unité filtrante possède une paroi de sortie 68b s'étendant horizontalement de gauche à droite en reliant l'extrémité distale d'un bloc 66 à l'extrémité distale de la cloison située à sa droite (les extrémités considérées sont en bas de la figure 9). Cette paroi de sortie 68b empêche la sortie du liquide par le bas de la zone 51a, en obligeant le liquide à franchir la cloison 20' à droite de laquelle se situe une zone de récupération du liquide 51b bouchée dans sa partie haute par la paroi 68a et ouverte dans sa partie basse qui constitue la sortie de l'unité filtrante 50 et qui communique avec le canal de recueillement du liquide 64b.

Le liquide à filtrer s'écoule dans le canal d'entrée 61a, se répartit dans la rigole d'entrée 62a, passe dans le canal d'alimentation 64a des unités filtrantes, passe dans une des zones 51a, franchit la cloison 20' située à droite de la zone 51a, s'écoule vers le bas de la zone 51b située à droite de la cloison 20', passe dans le canal de recueillement 64b qui récupère le liquide à la sortie de toutes les unités filtrantes 50 et s'écoule dans la rigole de sortie 62b avant d'être évacué par le canal de sortie 61b.

La fabrication du filtre de la micropompe selon l'invention utilise les techniques de micro-usinage du silicium: la cloison 20 ou 20' et la cavité ou rainure 13 sont réalisées par usinage de la plaquette de silicium 12. Ce micro-usinage peut être réalisé par oxydation du substrat ou photolithographie. Ainsi la rainure 13 peut être réalisée par gravure, la cloison étant obtenue par gravure superficielle. Les zones de la cloison constituant les fentes de passage du liquide sont réalisées en enlevant l'oxyde formé à cet endroit et les points d'attache peuvent être en oxyde de silicium sur lequel sera relié par soudage anodique le couvercle en verre du filtre.

Dans le mode préférentiel de réalisation du filtre qui comporte une ou plusieurs cloisons 20' en lacets (figures 3 et 9), il peut apparaître, lors de l'amorçage de la pompe, des bulles d'air dans les replis de la cloison en lacets. Ces bulles d'air ont pour inconvénient de limiter la longueur utile filtrante de la cloison en lacets. Ce phénomène est davantage marqué dans le cas de la figure 9 où le sens d'écoulement du liquide n'est pas orthogonal à la direction générale de la cloison en lacets mais où le liquide arrive plutôt parallèlement à cette direction et qu'une des extrémités de la cloison est en contact avec le liquide avant l'autre.

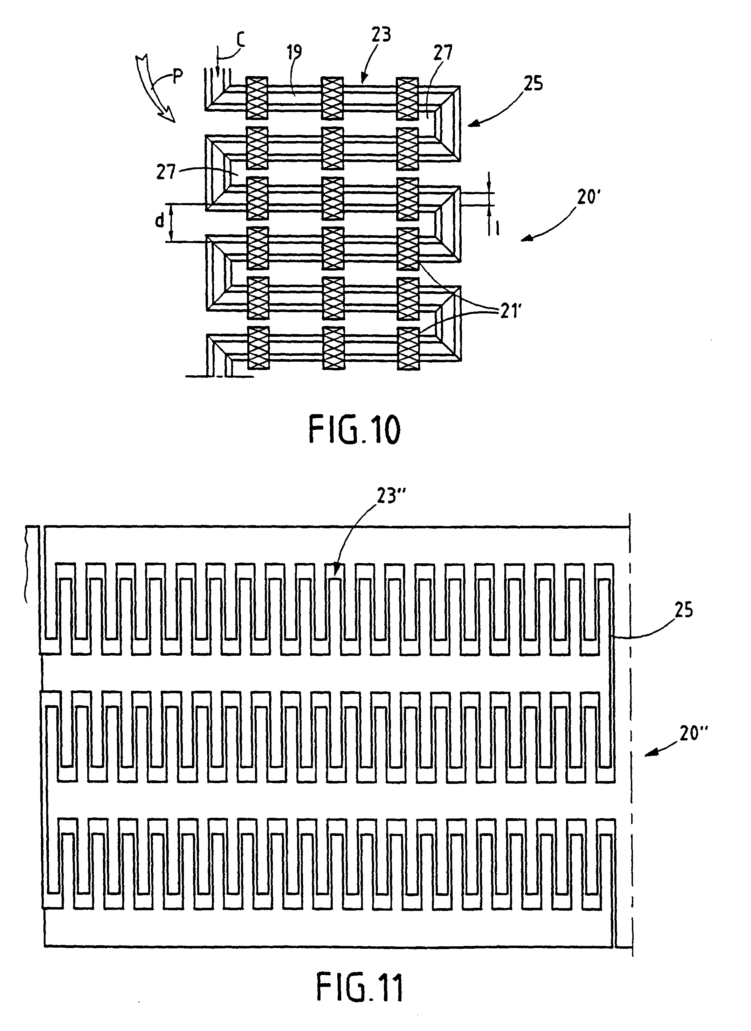

Sous les effets conjugués de la pression du liquide qui arrive en amont de la cloison en lacets 20' (flèche P de la figure 10) et l'avancée du liquide par capillarité le long de la fente surmontant le sommet 19 de la cloison (flèche C de la figure 10), une bulle d'air peut se former dans le creux du repli 27 d'un lacet lorsque le liquide parvient au niveau du sommet de la cloison, au voisinage du repli, avant de remplir ledit creux. En effet, dans ce cas, l'air peut difficilement s'échapper par la fente qui est remplie de liquide.

Plusieurs solutions alternatives pouvant être combinées entre elles sont proposées pour résoudre ce problème.

On peut prévoir que certains des moyens d'attache possèdent une largeur plus importante que la largeur 1 au sommet 19 de la cloison 20' de sorte qu'ils dépassent de part et d'autre de ladite cloison 20'. De tels moyens d'attache sont représentés sur la figure 10 sous la forme de piliers 21' régulièrement répartis sur les premiers éléments de cloison 23 en dépassant transversalement par rapport à ces premiers éléments de cloison 23. Ces piliers 21' constituent des obstacles au cheminement du liquide par capillarité le long de la fente en regard du sommet 19 de la cloison 20' car ils doivent être contournés par le liquide, ce qui n'est pas possible par capillarité car ces piliers 21' sont reliés directement, comme illustré à la figure 8, à la plaquette en verre 10 ou toute plaquette située en vis à vis de la cloison 20'.

Selon une autre possibilité, sur au moins une portion de la longueur de la cloison 20', la surface de la cloison 20' est hydrophobe de sorte que le phénomène de capillarité précédemment décrit n'est plus possible et que la pression de liquide permet tout de même la traversée du filtre par ce liquide. Plus précisément, seul le sommet 19 de la cloison 20' est rendu hydrophobe et non pas les parois verticales. Pour cela, une couche de matériau hydrophobe peut être déposée à la surface de la cloison 20' ou bien on retire l'oxyde de silicium, hydrophile, de la surface de la cloison 20' en silicium, sur au moins une portion de la longueur de la cloison 20'. Ainsi, on laisse le silicium, hydrophobe, de la cloison 20' en contact avec le liquide lors de l'amorçage de la pompe, ce qui freine le phénomène de capillarité, la formation ultérieure d'oxyde de silicium n'étant alors plus gênante après l'amorçage de la pompe. De préférence on place la couche hydrophobe au moins sur la surface des deuxièmes éléments de cloison 25 qui forment le fond des replis 27 des lacets.

Il est également possible de conformer et de dimensionner la cloison en lacets 20' de sorte que, lors de l'amorçage de la pompe, l'intérieur de chaque repli 27 d'un lacet de la cloison, du côté de la partie amont de la cavité 13, soit entièrement rempli de liquide avant la portion de la fente située en regard de la portion du sommet 19 de la cloison 20' qui est adjacente à ce repli 27. Cette portion de fente correspond au moins aux deuxièmes éléments de cloison 25. Il suffit de choisir la forme, le profil, la hauteur, la largeur totale et la largeur au sommet de la cloison 20' permettant de réduire au maximum la vitesse d'écoulement du liquide par capillarité dans la fente du filtre.

Par exemple, on peut augmenter davantage la longueur totale de la cloison, c'est à dire le chemin à parcourir par capillarité par le liquide et réduire ainsi la vitesse d'écoulement par capillarité. Selon une possibilité, au moins une portion de la longueur de chaque lacet de la cloison 20" est en zigzag, du type fractal par exemple. Un exemple de réalisation est illustré sur la figure 11 sur laquelle les premiers éléments de cloison 23" d'une cloison 20" sont en lacets avec des replis rapprochés entre eux tels des méandres serrés.

Il faut également remarquer que la configuration en zigzag permet d'augmenter la section franchie par le liquide. Ainsi, un taux de filtration minimum pourra être obtenu, même si des bulles d'air se créent dans certains replis des lacets 23."

Dans les micropompes à usage médical, il est préférable, surtout pour certains fluides médicaux particulièrement corrosifs, de prévoir un film protecteur sur la surface du verre qui va être en contact avec ce fluide. Toutefois, ce film ne peut pas s'étendre exactement sur toute la surface exposée du verre et, notamment, les zones adjacentes à une liaison réalisée par soudage anodique entre verre et silicium ne peuvent pas être entièrement protégées par le film protecteur de sorte que ces zones sont soumises à la corrosion par le fluide médical.

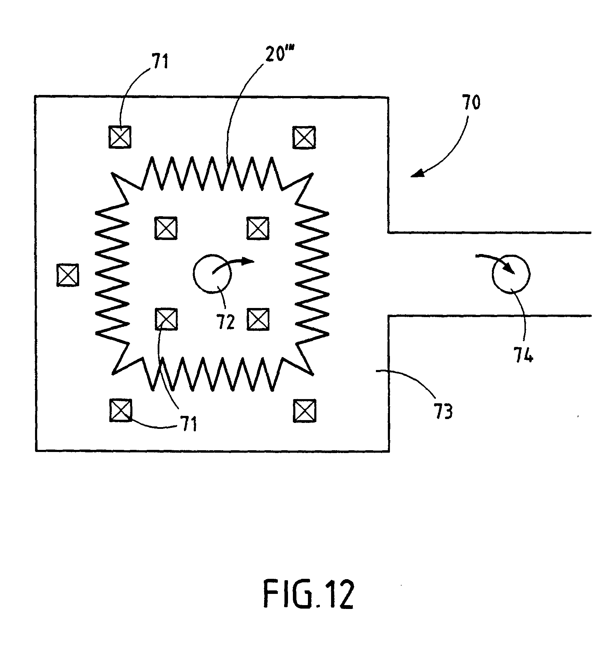

Afin de diminuer les zones précitées qui sont exposées à la corrosion par le fluide médical, on peut envisager d'autres formes de filtre. Un exemple est illustré par la figure 12 sur laquelle un filtre 70 à écoulement radial est représenté. Ce filtre 70 est réalisé dans une rainure 73 de forme générale assez large, réalisée à la surface d'une plaquette de silicium, qui comprend un orifice d'entrée 72 et un orifice de sortie 74. La cloison 20"', par exemple en forme de zigzag ou de créneaux, est refermée sur elle-même en entourant un des deux orifices, l'autre orifice étant placé de l'autre côté de la cloison 20'''. De la même manière que décrit précédemment, des piliers 71, placés sur ou à côté de la cloison 20"', permettent de maintenir un écartement constant entre le sommet de la cloison et la face plane de la plaquette de verre 10 qui se trouve en regard de la cloison 20"'.

## Revendications

1. Micropompe (11) comportant un filtre micro-usiné et au moins deux premiers moyens formant plaquettes (10,12) qui définissent une chambre de pompage (9), ledit filtre comprenant des moyens d'alimentation en liquide, des moyens pour recueillir le liquide, des deuxièmes moyens formant plaquette (10) et des moyens formant plaquette de silicium (12; 15), lesdits deuxièmes moyens formant plaquette (10) et lesdits moyens formant plaquette de silicium (12;15) se faisant face respectivement en formant, entre eux, une cavité (13) destinée à recevoir un liquide, ladite cavité (13) étant partiellement obturée par au moins une cloison (20; 20') transversale dont la hauteur est inférieure à la profondeur de la cavité (13) et qui sépare la cavité (13) en une partie amont et une partie aval par rapport à ladite cloison, lesdits moyens formant plaquette de silicium (12; 15) étant au moins partiellement fixés de façon étanche sur lesdits deuxièmes moyens formant plaquette (10), ladite partie aval de la cavité (13) communicant avec ladite chambre de pompage (9) et, l'ensemble comprenant les deux premiers moyens formant plaquette (10, 12), les moyens formant plaquette de silicium (12;15) et les deuxièmes moyens formant plaquette (10) constituant une structure en sandwich,
**caractérisée en ce que** ladite cloison (20 ; 20') est continue entre les parois latérales de ladite cavité (13).

2. Micropompe selon la revendication 1,
**caractérisée en que** la cloison (20') traverse la cavité (13) en étant repliée en lacets.

3. Micropompe selon la revendication 2,
**caractérisée en ce que** la fixation entre, d'une part, les deux premiers moyens formant plaquette (10, 12) et définissant ladite chambre de pompage et, d'autre part, les moyens formant plaquette de silicium (12; 15) et les deuxièmes moyens formant plaquette (10) est réalisée par soudage anodique.

4. Micropompe selon la revendication 3,
**caractérisée en ce qu'**elle possède au moins un organe de contrôle d'entrée (30a; 40a) du liquide situé en aval de ladite cavité (13) et en amont de ladite chambre de pompage (9).

5. Micropompe selon la revendication 4,
**caractérisée en ce que** l'un des premiers moyens formant plaquette (12) et les moyens formant plaquette de silicium constituent la même plaquette de silicium (12) et **en ce que** l'autre des premiers moyens formant plaquette et les deuxièmes moyens formant plaquette constituent la même plaquette de verre (10).

6. Micropompe selon l'une quelconque des revendications précédentes,
**caractérisée en ce que** ladite cloison (20; 20') et ladite cavité (13) sont réalisées par usinage d'une surface des moyens formant plaquette de silicium (12).

7. Micropompe selon l'une quelconque des revendications précédentes,
**caractérisée en ce que** ladite cloison (20; 20') possède des parois latérales inclinées en biseau par rapport à la direction orthogonale aux faces planes des moyens formant plaquette de silicium (12).

8. Micropompe selon l'une quelconque des revendications précédentes,
**caractérisée en ce qu'**au moins deux cloisons (20; 20') sont placées en parallèle dans ladite cavité (13) afin de former au moins deux unités filtrantes (50) et **en ce que** le filtre (60) comprend en outre des moyens d'alimentation en liquide (61a, 62a, 64a) de chaque unité filtrante (50) et des moyens (64b, 62b, 61b) pour recueillir le liquide à la sortie de chaque unité filtrante (50).

9. Micropompe selon la revendication 1 ou 8,
**caractérisée en ce que** lesdits moyens d'alimentation en liquide et lesdits moyens pour recueillir le liquide comprennent respectivement un canal d'entrée (61a) et un canal de sortie (61b) du filtre, le niveau inférieur desdits canaux étant plus bas que la base de la cloison (20').

10. Micropompe selon la revendication 8,
**caractérisée en ce que** lesdits moyens d'alimentation en liquide et lesdits moyens pour recueillir le liquide comprennent en outre des moyens de répartition du liquide (62a, 62b) destinés à permettre une distribution homogène du liquide entre les différentes unités filtrantes (50).

11. Micropompe selon la revendication 10,
**caractérisée en ce que** lesdits moyens de répartition comprennent une rainure profonde (62a, 62b) dont le niveau de fond constitue le niveau le plus bas de toutes les parties du filtre pouvant recevoir le liquide.

12. Micropompe selon la revendication 8,
**caractérisée en ce que** le filtre comporte en outre des moyens de séparation (66, 68a, 68b) empêchant le passage direct du liquide entre deux unités filtrantes (50).

13. Micropompe selon l'une quelconque des revendications précédentes,
**caractérisée en ce que** ladite cloison comporte des moyens d'attache (21, 56) destinés à relier directement avec un écartement constant ladite cloison (20; 20') aux moyens formant plaquette (10) faisant face aux moyens formant plaquette (12; 15) qui portent la base de ladite cloison.

14. Micropompe selon la revendication 2,
**caractérisée en ce que** la largeur (L) des lacets est inférieure à 1 mm.

15. Micropompe selon la revendication 2,
**caractérisée en ce que** la cloison repliée en lacets (20') s'étend sur une longueur (D) d'au moins 1 mm.

16. Micropompe selon la revendication 2,
**caractérisée en ce que** la largeur (d) entre deux lacets voisins est comprise entre 20 et 200 micromètres.

17. Micropompe selon la revendication 1 ou 2,
**caractérisée en ce que** la largeur au sommet (1) de la cloison (20; 20') est comprise entre 1 et 20 micromètres.

18. Micropompe selon l'une quelconque des revendications précédentes,
**caractérisée en ce que** les deuxièmes moyens formant plaquette (10) sont en verre.

19. Micropompe selon les revendications 2 et 13,
**caractérisée en ce qu'**au moins certains desdits moyens d'attache (21') possèdent une largeur plus importante que la largeur (1) au sommet (19) de la cloison (20') de sorte qu'ils dépassent de part et d'autre de ladite cloison (20').

20. Micropompe selon la revendication 2,
**caractérisée en ce que**, sur au moins une portion de la longueur de ladite cloison (20'), la surface de ladite cloison (20') est hydrophobe.

21. Micropompe selon la revendication 2,
**caractérisée en ce que** la cloison (20') est dimensionnée de sorte que l'intérieur de chaque repli (27) d'un lacet de ladite cloison (20'), du côté de la partie amont de la cavité (13) soit entièrement rempli de liquide avant la portion de la fente située en regard de la portion du sommet (19) de la cloison (20') qui est adjacente audit repli.

22. Micropompe selon la revendication 2,
**caractérisée en ce qu'**au moins une portion (23") de la longueur de chaque lacet de ladite cloison (20") est en zigzag.

## Claims

1. A micropump (11) comprising a micro-machined filter and at least two first plate-forming means (10, 12) defining a pump chamber (9), said filter comprising liquid feed means, liquid collection means, second plate-forming means (10) and silicon plate-forming means (12; 15), said second plate-forming means (10) and said silicon plate-forming means (12; 15) facing each other and forming, between them, a cavity (13) designed to receive a liquid, said cavity (13) being partially closed by at least one transverse partition (20; 20') of height that is smaller than the depth of the cavity (13) and which separates the cavity (13) into an upstream portion and a downstream portion relative to said partition, said silicon plate-forming means (12; 15) being fixed at least in part in leakproof manner on said second plate-forming means (10), said downstream portion of the cavity (13) communicating with said pump chamber (9), and the assembly comprising the first plate-forming means (10, 12), the silicon plate-forming means (12; 15), and the second plate-forming means (10), constituting a sandwich structure,
said micropump being **characterised in that** the partition (20, 20') is continuous between the side walls of said cavity (13).

2. A micropump according to claim 1,
**characterised in that** the partition (20') passes through the cavity (13) where it is folded in a hairpin-bend configuration.

3. A micropump according to claim 2,
**characterised in that** the fixing between the two first plate-forming means (10, 12) defining said pump chamber, on the one hand and, the silicon plate-forming means (12, 15) and the second plate-forming means (10), on the other hand, is performed by anode welding.

4. A micropump according to claim 3,
**characterised in that** it possesses at least one liquid inlet control member (30a; 40a) situated downstream from said cavity (13) and upstream from said pump chamber (9).

5. A micropump according to claim 4,
**characterised in that** one of the first plate-forming means (12) and the silicon plate-forming means constitute the same plate of silicon (12) and **in that** the other first plate-forming means and the second plate-forming means constitute the same glass plate (10).

6. A micropump according to any one of the preceding claims,
**characterised in that** said partition (20; 20') and said cavity (13) are made by machining a surface of the silicon plate-forming means (12).

7. A micropump according to any one of the preceding claims,
**characterised in that** said partition (20; 20') possesses side walls that are inclined in a chamfer relative to the direction orthogonal to the plane faces of the silicon plate-forming means (12).

8. A micropump according to any one of the preceding claims,
**characterised in that** at least two partitions (20; 20') are placed in parallel in said cavity (13) so as to form at least two filter units (50), and **in that** the filter (60) further comprises liquid feed means (61a, 62a, 64a) for each filter unit (50) and liquid collection means (64b, 62b, 61b) at the outlet from each filter unit (50).

9. A micropump according to claim 1 or 8,
**characterised in that** said liquid feed means and said liquid collection means comprise respectively an inlet channel (61a) and an outlet channel (61b) of the filter, with the bottom levels of said channels being lower than the base of the partition (20').

10. A micropump according to claim 8,
**characterised in that** said liquid feed means and said liquid collection means further comprise liquid distribution means (62a, 62b) designed to enable liquid to be distributed uniformly between the various filter units (50).

11. A micropump according to claim 10,
**characterised in that** said distribution means comprise a deep groove (62a, 62b) whose bottom is at a level that is lower than that of all of the portions of the filter that can receive the liquid.

12. A micropump according to claim 8,
**characterised in that** the filter further comprises separation means (66, 68a, 68b) preventing liquid from passing directly between two filter units (50).

13. A micropump according to any one of the preceding claims,
**characterised in that** said partition comprises attachment means (21, 56) designed to connect directly said partition (20; 20') to the plate-forming means (10) facing the plate-forming means (12; 15) carrying the base of said partition with constant spacing.

14. A micropump according to claim 2,
**characterised in that** the width (L) of the hairpin-bend configuration is less than 1 mm.

15. A micropump according to claim 2,
**characterised in that** the partition folded into a hairpin-bend configuration (20') extends over a length (D) of at least 1 mm.

16. A micropump according to claim 2,
**characterised in that** the width (d) between two adjacent portions of hairpin-bend lies in the range 20 micrometer (µm) to 200 µm.

17. A micropump according to claim 1 or 2,
**characterised in that** the width at the top (*l*) of the partition (20; 20') lies in the range 1 µm to 20 µm.

18. A micropump according to any one of the preceding claims,
**characterised in that** the second plate-forming means (10) are made of glass.

19. A micropump according to claims 2 and 13,
**characterised in that** at least some of said attachment means (21') are of a width greater than the width (*l*) at the top (19) of the partition (20') so as to project on either side of said partition (20').

20. A micropump according to claim 2,
**characterised in that** over at least a portion of the length of said partition (20'), the surface of said partition (20') is hydrophobic.

21. A micropump according to claim 2,
**characterised in that** the partition (20') is dimensioned in such a manner that the inside of each fold (27) of a hairpin-bend of said partition (20'), on the upstream side of the cavity (13) is filled completely with liquid before the slot portion situated facing the top portion (19) of the partition (20') adjacent thereto is itself filled.

22. A micropump according to claim 2,
**characterised in that** at least a portion (23") of the length of each hairpin-bend of said partition (20") is of a zigzag configuration.

## Patentansprüche

1. Mikropumpe (11), die einen mikrobearbeiteten Filter und wenigstens zwei erste Plättchen(10; 12) bildende Mittel, die eine Pumpkammer (9) definieren, aufweist, wobei der Filter Mittel zum Zuführen von Flüssigkeit, Mittel zum Aufnehmen der Flüssigkeit, zweite ein Plättchen (10) bildende Mittel und ein Siliziumplättchen (12; 15) bildende Mittel aufweist, wobei die zweiten ein Plättchen (10) bildenden Mittel und die ein Siliziumplättchen (12; 15) bildenden Mittel sich jeweils begegnen, indem sie untereinander einen Hohlraum (13) bilden, der zur Aufnahme einer Flüssigkeit bestimmt ist, wobei der Hohlraum (13) teilweise durch wenigstens eine querverlaufende Zwischenwand (20; 20') verschlossen ist, deren Höhe kleiner ist als die Tiefe des Hohlraums (13) und die den Hohlraum (13) in einen stromaufwärtigen (oberen)Teil und einen stromabwärtigen (unteren) Teil bezüglich der Zwischenwand trennt, wobei die ein Siliziumplättchen (12; 15) bildenden Mittel wenigstens teilweise dicht auf den zweiten ein Plättchen (10) bildenden Mitteln befestigt sind, wobei der stromaufwärtige Teil des Hohlraums (13) mit der Pumpkammer (9) in Verbindung steht und die Anordnung, die die beiden ersten ein Plättchen (10; 12) bildenden Mittel, die ein Siliziumplättchen (12; 15) bildenden Mittel und die zweiten ein Plättchen (10) bildenden Mittel umfasst, eine Sandwichstruktur bildet,
**dadurch gekennzeichnet, dass** die Zwischenwand (20; 20') zwischen den Seitenwänden der Hohlraum (13) fortlaufend ist.

2. Mikropumpe nach Anspruch 1,
**dadurch gekennzeichnet, dass** die Zwischenwand (20') den Hohlraum (13), indem sie in Schleifen gelegt ist, durchquert.

3. Mikropumpe nach Anspruch 2,
**dadurch gekennzeichnet, dass** die Befestigung zwischen einerseits den ersten beiden Mitteln, die ein Plättchen (10; 12) bilden und die Pumpkammer definieren und andererseits den ein Siliziumplättchen (12; 15) bildenden Mitteln und den zweiten ein Plättchen (10) bildenden Mitteln durch anodisches Schweißen hergestellt ist.

4. Mikropumpe nach Anspruch 3,
**dadurch gekennzeichnet, dass** sie wenigstens ein Element zur Steuerung des Eintritts (30a; 40a) der Flüssigkeit, das stromabwärts von dem Hohlraum (13) und stromaufwärts der Pumpkammer (9) liegt, aufweist.

5. Mikropumpe nach Anspruch 4,
**dadurch gekennzeichnet, dass** das eine der ersten ein Plättchen (12) bildenden Mittel und die ein Siliziumplättchen bildenden Mittel dasselbe Siliziumplättchen (12) bilden, und dass das andere der ersten ein Plättchen bildenden Mittel und die zweiten ein Plättchen bildenden Mittel dasselbe Glasplättchen (10) bilden.

6. Mikropumpe nach einem der vorhergehenden Ansprüche,
**dadurch gekennzeichnet, dass** die Zwischenwand (20; 20') und der Hohlraum (13) durch Bearbeitung einer Oberfläche der ein Siliziumplättchen (12) bildenden Mittel hergestellt sind.

7. Mikropumpe nach einem der vorhergehenden Ansprüche,
**dadurch gekennzeichnet, dass** die Zwischenwand (20; 20') Seitenwände besitzt, die bezüglich der senkrechten Richtung zu den ebenen Seiten der ein Siliziumplättchen (12) bildenden Mittel schräg geneigt sind.

8. Mikropumpe nach einem der vorhergehenden Ansprüche,
**dadurch gekennzeichnet, dass** wenigstens zwei Zwischenwände (20, 20') parallel in der Hohlraum (13) plaziert sind, um wenigstes zwei Filtereinheiten (50) zu bilden, und dass der Filter (60) außerdem Mittel (61a, 62a, 64a) zur Speisung mit Flüssigkeit jeder Filtereinheit (50) und Mittel (64b, 62b, 61b) zur Aufnahme der Flüssigkeit am Ausgang jeder Filtereinheit (50) aufweist.

9. Mikropumpe nach Anspruch 1 oder 8,
**dadurch gekennzeichnet, dass** die Mittel zum Zuführen von Flüssigkeit und die Mittel zur Aufnahme der Flüssigkeit einen Eingangskanal (61a) bzw. einen Ausgangskanal (61b) des Filters aufweisen, wobei das untere Niveau der Kanäle niedriger ist als die Basis der Zwischenwand (20').

10. Mikropumpe nach Anspruch 8,
**dadurch gekennzeichnet, dass** die Mittel zum Zuführen von Flüssigkeit und die Mittel zur Aufnahme der Flüssigkeit außerdem Mittel zum Verteilen der Flüssigkeit (62a, 62b) aufweisen, die dazu bestimmt sind eine homogene Verteilung der Flüssigkeit zwischen den verschiedenen Filtereinheiten (50) zu gestatten.

11. Mikropumpe nach Anspruch 10,
**dadurch gekennzeichnet, dass** die Mittel zum Verteilen eine tiefe Rille (62a, 62b) aufweisen, deren Bodenhöhe das niedrigste Niveau aller Filterteile, die die Flüssigkeit aufnehmen können, bildet.

12. Mikropumpe nach Anspruch 8,
**dadurch gekennzeichnet, dass** der Filter außerdem Mittel zum Trennen (66, 68a, 68b) aufweist, die den direkten Durchgang der Flüssigkeit zwischen zwei Filtereinheiten (50) verhindern.

13. Mikropumpe nach einem der vorhergehenden Ansprüche,
**dadurch gekennzeichnet, dass** die Zwischenwand Mittel zum Verbinden (21, 56) aufweist, die dazu bestimmt sind, die Zwischenwand (20, 20') mit einem konstanten Abstand direkt zu verbinden mit den ein Plättchen (10) bildenden Mitteln, die den ein Plättchen (12, 15) bildenden Mitteln, die die Basis der Zwischenwand tragen, gegenüberstehen.

14. Mikropumpe nach Anspruch 2,
**dadurch gekennzeichnet, dass** die Breite (L) der Schleifen kleiner als 1 mm ist.

15. Mikropumpe nach Anspruch 2,
**dadurch gekennzeichnet, dass** die in Schleifen gefaltete Zwischenwand (20') sich auf einer Länge (D) von wenigstens 1 mm erstreckt.

16. Mikropumpe nach Anspruch 2,
**dadurch gekennzeichnet, dass** die Breite (d) zwischen zwei benachbarten Schleifen zwischen 20 und 200 Mikrometer beträgt.

17. Mikropumpe nach Anspruch 1 oder 2,
**dadurch gekennzeichnet, dass** die Breite an dem Scheitel (l) der Zwischenwand (20, 20') zwischen 1 und 20 Mikrometer beträgt.

18. Mikropumpe nach einem der vorhergehenden Ansprüche,
**dadurch gekennzeichnet, dass** die zweiten ein Plättchen (10) bildenden Mittel aus Glas sind.

19. Mikropumpe nach den Ansprüchen 2 und 13,
**dadurch gekennzeichnet, dass** wenigstens einige der Verbindungsmittel (21') eine Breite besitzen, die größer ist als die Breite (l) an dem Scheitel (19) der Zwischenwand (20'), derart, dass sie die Zwischenwand (20') auf beiden Seiten überragen.

20. Mikropumpe nach Anspruch 2,
**dadurch gekennzeichnet, dass** auf wenigstens einem Abschnitt der Länge der Zwischenwand (20') die Oberfläche der Zwischenwand (20') hydrophob ist.

21. Mikropumpe nach Anspruch 2,
**dadurch gekennzeichnet, dass** die Zwischenwand (20') derart bemessen ist, dass das Innere jeder Falte (27) einer Schleife der Zwischenwand (20'), von der Seite des stromaufwärtigen Teils des Hohlraums (13) her, vollständig mit Flüssigkeit gefüllt ist vor dem Abschnitt des Schlitzes, der dem Abschnitt des Scheitels (19) der Zwischenwand (20'), die dieser Falte benachbart ist, gegenüberliegt.

22. Mikropumpe nach Anspruch 2,
**dadurch gekennzeichnet, dass** wenigstens ein Abschnitt (23") der Länge jeder Schleife der Zwischenwand (20") zickzackartig ist.
